Europäisches Patentamt

European Patent Office

Office européen des brevets

(19)

(11) Publication number: **0 056 508**
**A1**

(12) **EUROPEAN PATENT APPLICATION**

(21) Application number: **81300217.7**

(22) Date of filing: **19.01.81**

(51) Int. Cl.³: **F 15 D 1/08**
**B 63 H 11/00, F 02 K 1/78**
**F 02 K 1/00**

(43) Date of publication of application:
28.07.82 Bulletin 82/30

(84) Designated Contracting States:
DE FR NL

(71) Applicant: The Secretary of State for Defence in Her Britannic Majesty's Government of The United Kingdom of Great Britain and Northern Ireland Whitehall London SW1A 2HB(GB)

(72) Inventor: Barsby, Charles Rutland Flat 1 36 The Embankment Bedford Bedfordshire(GB)

(74) Representative: Gunning, William John et al, Procurement Executive, Ministry of Defence Patents 1A(4), Room 1932 Empress State Building Lillie Road London SW6 1TR(GB)

(54) A method of and apparatus for increasing the thrust produced by a fluid jet discharging from a pipe.

(57) The thrust of a jet of fluid (5) issuing from a pipe is increased by arranging that the fluid discharges into a tube (2) of larger diameter than the pipe outlet, the tube being joined at one end in a fluid-tight manner to the pipe outlet and having a length such that the other end (1) of the tube (2) is just contacted by the periphery of the jet of fluid (5) after passing through the tube (2). The presence of the tube (2) causes a suction effect in the annular space (4) around the pipe outlet thereby increasing the jet speed. The invention can be applied to a fluid propulsion system, to the nozzle of a fire-fighting hose, to the exhaust from an internal combustion engine or the gas propulsion jet issuing from an aircraft or a hovercraft.

EP 0 056 508 A1

FIG. 2.

COMPLETE DOCUMENT

-2-

This invention relates to a method of and apparatus for increasing the thrust produced by a jet of fluid issuing from a pipe or nozzle and is applicable to the fluid jet issu ing from the propellor nozzle of a boat, the nozzle of a jet-propelled boat or the nozzle of a fire-fighting or other hose-pipe, the exhaust gases discharged from an internal combustion engine or other power unit, or the gas-propulsion jet issuing from an aircraft or hovercraft.

In all the above-mentioned forms of jet, except in the case of the jet issuing from the propellor nozzle of a boat, the fluid is under pressure within the pipe or nozzle and achieves its maximum velocity at the discharge end of the pipe or nozzle, at which point thrust is imparted to the nozzle. After the fluid leaves the nozzle its velocity decreases due to frictional contact with the ambient medium into which it discharges.

It has been found, according to the present invention, that if the outlet of the pipe or nozzle is arranged to discharge into a tube of larger diameter than the nozzle, which tube is joined at one end in fluid-tight manner to the nozzle outlet and is of such a length that the tube outlet is just contacted by the periphery of the jet of fluid after the latter has issued from the nozzle and passed through the tube, then due to the effect of fluid friction on the static fluid surrounding the jet, suction will be created in the annular space formed between the periphery of the jet, after issuing from the pipe or nozzle, and the remainder of the tube wall. In response to this suction the pressure drop across the nozzle outlet is increased and results in an increase in jet speed at the nozzle while the tube will prevent the sound of the jet from escap ing into the ambient medium until the velocity of the jet has become appreciably lower.

The invention will be further described with reference to the accompanying diagrammatic drawings in which:

Figure 1 illustrates the flow pattern of the fluid jet issuing from a conventional jet pipe or nozzle;

Figure 2 illustrates the flow pattern obtained in accordance with the present invention;

Figures 3 to 5 illustrate the effect of altering the length of the tube;

Figures 6 to 11 show various ways of forming the discharge end of the tube;

Figures 12 and 13 illustrate the operation of a conventional propellor nozzle;

Figures 14 and 15 illustrate the application of the invention to a propellor nozzle;

Figures 16 and 17 illustrate the flow pattern of the fluid jet issuing from the tail pipe of a jet aircraft operated in the choked condition;

Figure 18 illustrates the application of the invention to the tail pipe of Figures 16 and 17; and

Figure 19 illustrates the application of the invention to the exhaust pipe of a motor vehicle or other prime mover exhaust.

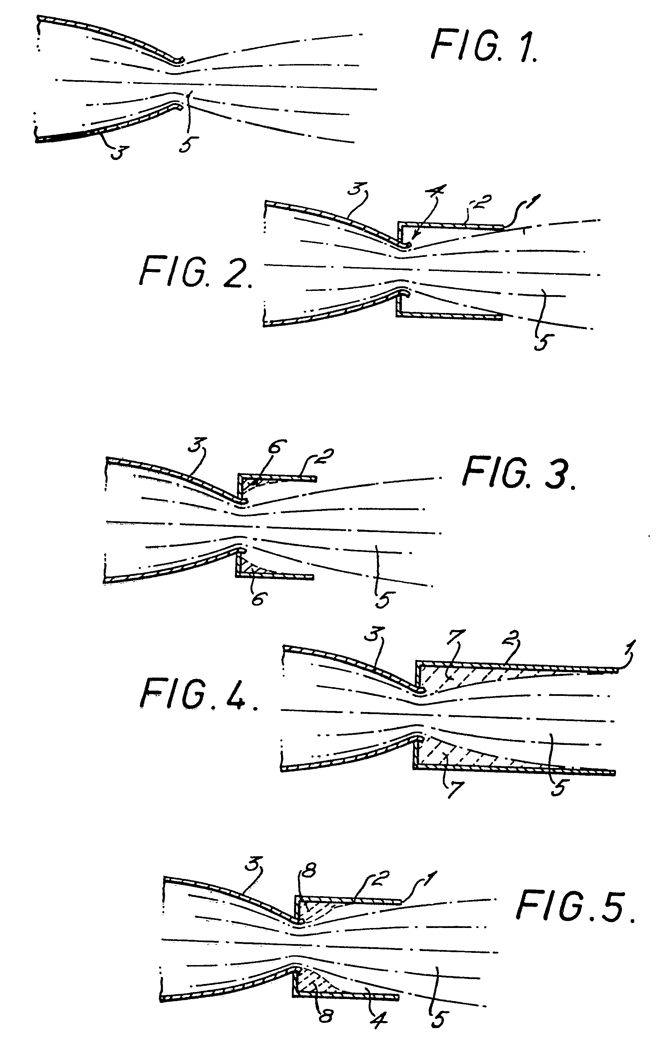

The flow pattern of the fluid issuing from a conventional jet pipe or nozzle is roughly as shown in Figure 1 whereas the principle of the invention is illustrated diagramatically in Figure 2 in which 1 denotes the outlet of a tube 2 joined at one end in fluid-tight manner to the outlet of a nozzle 3 and 4 denotes the space within which the suction is created.

Because the length of the tube 2 is such that a jet 5 issuing from the nozzle 3 makes contact with the tube 2 only at the discharge end 1 of the latter, the fluid jet is not constrained by the tube and accordingly, the point of thrust remains at the outlet of the pipe or nozzle and is not transferred to the discharge end of the tube. The increase in the pressure difference across the outlet of the pipe or nozzle 3 due to the suction created in the tube 2 results in an increase in thrust because the velocity of the jet 5 has increased

-4-

in proportion to the square root of said pressure difference. The extra work which is required to achieve this result is obtained from the velocity of the particles of the fluid jet 5 after they have left the outlet of the nozzle or pipe 3 and after the jet has done its work of creating thrust. The system, from the point of view of work done, may be considered as analogous to a steam engine with a condenser as opposed to a steam engine ex.hausting direct to atmosphere without a condenser.

The effect of altering the length of the tube 2 is shown in Figures 3 to 5.

In Figure 3 where the tube 2 is very short, it has little or no effect on the jet 5 since the outlet of the pipe or nozzle 3 is surrounded by the ambient air and the jet functions as a standard jet which issues at ambient fluid pressure. The only area of suction is that indicated by hatching 6 at the inner end of the tube 2.

In Figure 4, where the tube 2 is very long, the jet 5 is constrained by the tube and in accordance with Bernoulli's theorem, the total energy of the fluid at the outlet of the pipe or nozzle 3 equals the total energy of the fluid at the tube outlet so that the point of thrust has been transferred to the tube outlet 1 where the velocity of the jet is lower. The suction acting on the fluid is indicated by the hatched area 7 extending along the length of the jet 5.

Figure 5 illustrates the position according to the invention, in which the outlet 1 of the tube 2 is just contacted by the periphery of the fluid jet 5. To reach this position from the position shown in Figure 4 the tube 2 is slowly shortened and its outer end 1 begins to allow ambient fluid to flow into the suction annulus but this is at first countered by the velocity of the fluid jet 5 which tries to push it out again. As the tube 2 is further shortened the ambient fluid begins to push back the suction area 8 until, as shown in Figure 5, the ambient fluid occupies the space 4 around the jet 5 in the outer half of the tube whilst the inner half of the tube at 8 remains under suction. Under these conditions the point of thrust is now at the outlet of the pipe or nozzle 5.

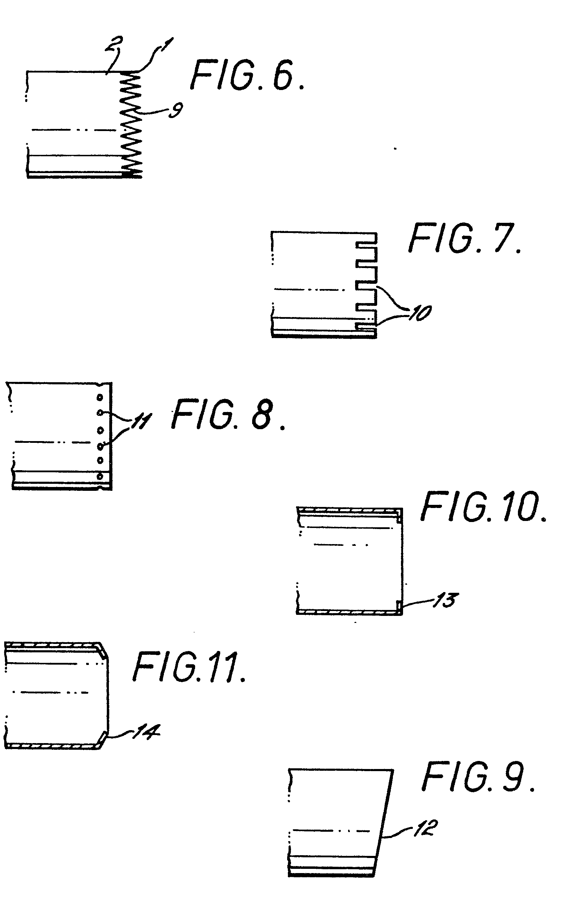

To introduce a vernier effect to the adjustment of the length of the tube 2, the discharge end 1 may, as shown in Figures 6 to 9, be formed with one or more rows of serrations 9, slots 10,perferations

11 or cut off at an angle to the diameter of the tube, as shown at 12 and/or, as shown in Figures 10 and 11, provided with an annular flange 13 or 14 of less diameter than that of the rest of the tube. In this manner the entry and discharge of ambient fluid into and from the outlet end 1 of the tube 2 upon adjustment of the tube's length takes place more gradually than would otherwise be the case.

It has been found in practice, in cases where it is physically difficult to adjust the length of the tube 2, that a tube of a fixed length which is a compromise between the extremes illustrated in Figures 3 and 4 may be used over the main working range of the jet. In this way, a good proportion of the available power advantage can be realised with a simpler construction.

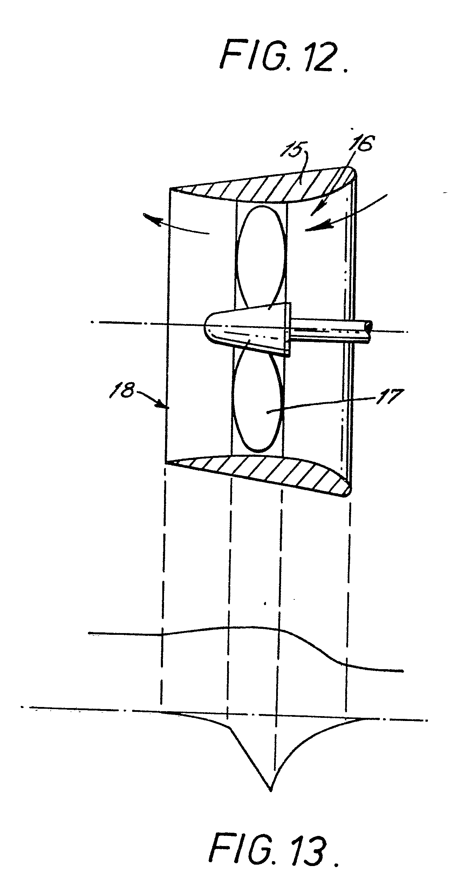

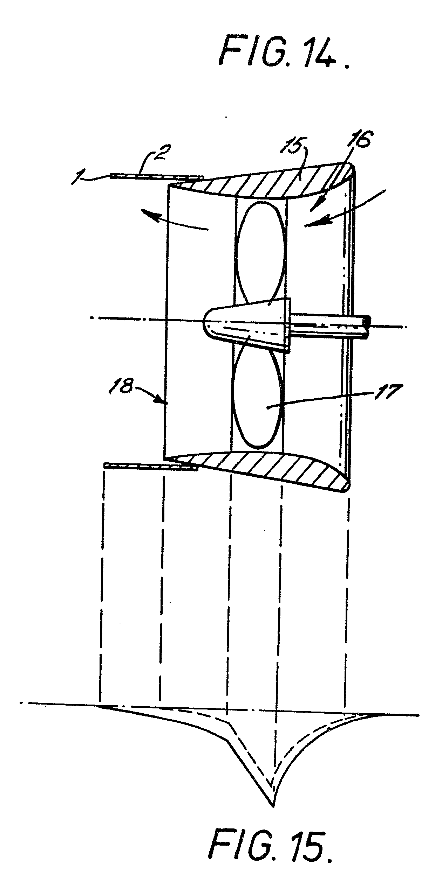

In the case of a conventional propellor nozzle 15, an example of which is shown in Figure 12, it will be seen that because the fluid issuing from the nozzle is at the ambient pressure of the surrounding water, there is a considerable suction created at the propellor intake 16 at low boat speeds and it is the pressure or suction difference, illustrated in Figure 13, across the propellor 17 and nozzle 15 that creates extra thrust in addition to the thrust imparted by the velocity energy in the water jet issuing from the propellor nozzle. When however, a tube 2 of the kind already described is added to this nozzle 15, as shown in Figure 14, a suction, in addition to the original pressure drop across the nozzle, is created at the nozzle outlet 18 and inlet 16 since the ambient pressure on the surrounding water is transferred to the tube outlet 1. In this manner, still greater thrust is imparted to the ship at low speeds, as indicated in Figure 15.

The invention is particularly applicable:-

1. To the increase of speed and reduction of noise in pure jet and fan-jet aircraft. If, for instance, the tube 2 is adjusted in the manner shown in Figure 4 at the moment of starting the run before take-off, then the suction at the intake to the jet engine will be greater with a greater overall pressure difference between the tail tube outlet and the engine intake, much as with the propellor nozzle. Greater thrust will therefore be available at the beginning of the take-off run. As the aircraft gathers speed the pilot will adjust the tube 2 in the manner shown in Figure 5 and have greater actual take-off and flying speed and improved noise reduction.

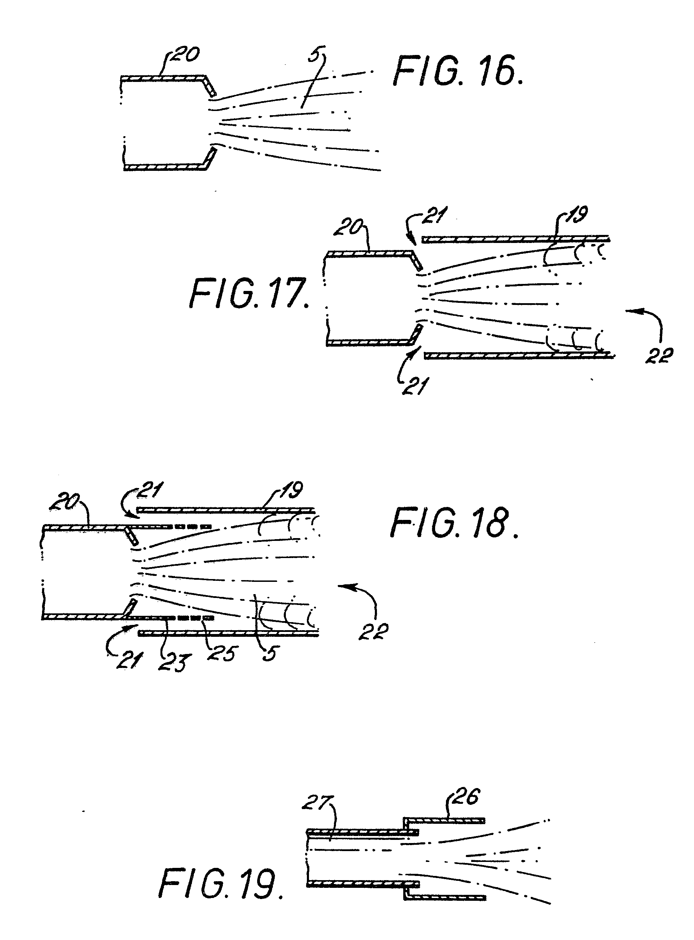

The invention can also be applied to jet aircraft in which the jet is operated in the choked condition. Figure 16 shows such a jet where, because of the choking effect, the contour of the fluid jet 5 billows out, and in order to harness the velocity energy which is thus created outside the choked jet, it has become standard practice to arrange a tube 19 around the outlet of a jet pipe 20 in order to use this energy to draw secondary air, represented by arrows 21, into the tube from around its inlet and eject it through the tube outlet as shown in Figure 17. This practice has the disadvantage, however, that the secondary air 21 can only mix with the fluid jet at the periphery of the latter leaving a central core 28 of gas, the extra velocity energy of which is not employed in imparting additional thrust to the aircraft. To overcome this disadvantage, an additional tube 23 is fitted in accordance with the invention. As will be seen from Figure 18 the suction effect created by the space around the outlet of the jet pipe 20 induces more secondary air from around the inlet of the tube 19 to flow into the body of the fluid jet 5 and mix therewith, thus reducing the central core and creating additional thrust. The wall of the tube 23 may be perforated or slotted, as shown for example, at 25 to allow ingress of secondary air where required.

2. To the increase in speed and reduction in noise of jet-propelled boats. It is possible to increase boat speed by about 10% and when used in conjunction with the propulsion unit described in UK Patent Specification No 1289094, boat speed can be increased by a further 6%.

3. To increase the effectiveness of propellor nozzles.

4. To increase the scavenging effect and reduce the silencing loss on motor vehicle engines, gas turbines and other internal combustion engines. When a tube 26 is fitted to the outlet of a motor vehicle exhaust pipe 27, as shown in Figure 19, it can produce a lowering of exhaust pipe pressure and the exhaust gas can discharge to atmosphere at a pressure below atmospheric without loss of energy, since energy is gained from the mass of gas leaving the tube 26 as is the case with a water jet. It is to be noted also that this lowering of exhaust pipe pressure is a function of engine speed rather than vehicle speed. The system works, therefore, when the vehicle is stationary or moving as compared with most exhaust tail trimmers which depend on vehicle speed only for their action.

WHAT I CLAIM IS:-

1. A method of increasing the thrust produced by a jet of fluid issuing from a pipe or nozzle comprising directing said jet into one end of a tube of a diameter larger than that of the outlet of the pipe or nozzle, which tube is joined in fluid-tight manner at said one or inlet end of the pipe or nozzle outlet and is of such a length that its other or outlet is just contacted by the periphery of the jet of fluid after the latter has issued from the pipe or nozzle and passed through the tube and that the fluid friction set up at the interface between the fluid jet issuing from the nozzle and the fluid in the annular space between the jet and the tube wall creates suction which serves to accelerate the jet of fluid.

2. Apparatus for carrying out the method claimed in Claim 1, comprising a pipe or nozzle, the intake of which is adapted to be connected to a source of fluid under pressure, and a tube of diameter larger than that of the outlet of the pipe or nozzle, said tube being joined in fluid-tight manner at one end to the pipe or nozzle outlet and being of such a length that its other or outlet end is just contacted by the periphery of a fluid jet issuing from the pipe or nozzle outlet and passing through the tube.

3. Apparatus according to Claim 2, wherein said tube is adjustable in length.

4. Apparatus according to Claim 2 or 3, wherein the outlet end of said tube is serrated, slotted or perforated.

5. Apparatus according to Claim 2 or 3, wherein the outlet end of said tube is cut off at an angle to a plane normal to the axis of the tube.

6. Apparatus according to any one of Claims 2 to 5, wherein the diameter of the outlet end of said tube is reduced by the provision of an internal annular flange.

7. Apparatus according to any one of Claims 2 to 6, wherein said nozzle is a propellor nozzle for use on a marine vessel.

8. Apparatus according to any one of Claims 2 to 6, wherein said pipe is the jet pipe of a pure-jet or fan-jet aircraft or hovercraft.

-8-

9. Apparatus according to Claim 8, wherein said jet pipe is operated in the choked condition with its outlet surrounded by a second tube which is radially spaced therefrom and said first tube is perforated or slotted to permit secondary air, drawn into the inlet end of said second tube, to be drawn into and mixed with the fluid jet issuing from said jet pipe.

10. Apparatus according to any one of Claims 2 to 6, wherein said pipe or nozzle is the jet-pipe of a pure-jet liquid-propulsion unit for a marine vessel.

11. Apparatus according to any one of Claims 2 to 6, wherein said pipe is the exhaust pipe of an internal combustion engine or other prime mover.

0056508

1/5

FIG. 1.

FIG. 2.

FIG. 3.

FIG. 4.

FIG. 5.

*FIG.6.*

*FIG.7.*

*FIG.8.*

*FIG.10.*

*FIG.11.*

*FIG.9.*

FIG.12.

FIG.13.

0056508

415

FIG. 14.

FIG. 15.

515

FIG. 16.

FIG. 17.

FIG. 18.

FIG. 19.

0056508

European Patent
Office

EUROPEAN SEARCH REPORT

Application number

EP 81 30 0217

| Category | Citation of document with indication, where appropriate, of relevant passages | Relevant to claim |
|---|---|---|
| | GB - A - 416 727 (OFFICE NATIONAL DES RECHERCHES SCIENTIFIQUES ET INDUSTRIELLES ET DES INVENTIONS) <br><br> * page 2, lines 21-93; page 3, lines 78-94; figure 1 * <br><br> --- | 1,2,7, 10 |
| | GB - A - 944 640 (ALGONQUIN SHIPPING AND TRADING) <br><br> * figure 3 * <br><br> --- | 1,2,5, 7,10 |
| | DE - A - 1 426 410 (KNAUS) <br><br> * the whole document * <br><br> --- | 1,2,8 |
| | US - A - 2 882 991 (KILLIAN) <br><br> * the whole document * <br><br> --- | 1,2,6, 8 |
| | FR - A - 2 288 892 (GENERAL ELEC-TRIC) <br><br> * page 1, line 34 - page 2, line 24 * <br> & GB - A - 1 530 128 <br> * page 1, line 52 - page 2, line 9; page 2, line 106 - page 4, line 22; figure 2 * <br><br> --- | 1,2,9 |
| | FR - A - 1 288 332 (RUMBLE) <br><br> * page 2, left-hand column, paragraph 1 * <br> & GB - A - 985 561 <br><br> --- | 1,2,8 |
| A | US - A - 3 192 715 (ENGEL) | |
| A | GB - A - 1 144 436 (ASAHINA) | ./. |

**DOCUMENTS CONSIDERED TO BE RELEVANT**

CLASSIFICATION OF THE APPLICATION (Int. Cl.³)

F 15 D 1/08
B 63 H 11/00
F 02 K 1/78
       1/00

TECHNICAL FIELDS SEARCHED (Int. Cl.³)

F 02 K
F 15 D
B 63 H
F 04 F

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-09-1981 | IVERUS |

EPO Form 1503.1   06.78

0056508

European Patent Office

**EUROPEAN SEARCH REPORT**

Application number

EP 81 30 0217 -2-

| | **DOCUMENTS CONSIDERED TO BE RELEVANT** | | CLASSIFICATION OF THE APPLICATION (Int. Cl.³) |
|---|---|---|---|
| Category | Citation of document with indication, where appropriate, of relevant passages | Relevant to claim | |
| A | US - A - 3 283 737 (GONGWER) | | |
| A | DE - A - 1 951 424 (MBB) | | |
| A | FR - A - 2 228 661 (STOCKMANN) | | |
| A | US - A - 2 475 022 (GREGG) | | |
| A | FR - A - 1 163 762 (PERCEVAUT) | | |
| A | FR - A - 1 190 537 (BUSTIN) | | |
| A, D | GB - A - 1 289 094 (BARSBY) | | TECHNICAL FIELDS SEARCHED (Int. Cl³) |
| A | BRUNO ECK: "TECHNISCHE STRÖMUNGS-LEHRE", edition 5, Springer-Verlag 1957 BERLIN (DE) pages 92-94, 159-162, 197-199, 228,229, 372-374 | | |

----------

EPO Form 1503.2   06.78